# EUROPÄISCHE PATENTSCHRIFT

(11) **EP 1 291 335 B1**
(45) Veröffentlichungstag und Bekanntmachung des Hinweises auf die Patenterteilung: **11.08.2004**
(21) Anmeldenummer: 01121227.1
(22) Anmeldetag: 05.09.2001
(51) Int. Cl.: C04B 41/88, C03C 17/06

(54) **Strahlenhärtbares Edelmetallpräparat, dieses enthaltende Abziehbilder und Verfahren zum Dekorieren**
Radiation curable precious metal composition, decalcomanias containing it and method of decorating
Composition radioréticulable contenant des métaux précieux, décalcomanies la comprenant et procédé de décoration

(43) Veröffentlichungstag der Anmeldung: 12.03.2003
(73) Patentinhaber: Ferro GmbH, 60327 Frankfurt (DE)
(72) Erfinder: Debus, Klaus, 60318 Frankfurt (DE); Schulz, Andreas, 63069 Offenbach (DE); Walter, Frank, 65428 Rüsselsheim (DE)
(74) Vertreter: Reinhardt, Markus, Dipl.-Ing.

(56) Entgegenhaltungen:
- DE-C- 3 819 414

## Beschreibung

Die Erfindung betrifft ein strahlenhärtbares Edelmetallpräparat, insbesondere Poliergoldpräparat, das neben einem Edelmetall, insbesondere elementares Gold, und einem Flussmittel, ein strahlenhärtbares, insbesondere UV-härtbares Druckmedium enthält. Die Erfindung betrifft auch das Edelmetallpräparat enthaltende Abziehbilder und ein Verfahren zum Dekorieren von dekorbrandfähigen Substraten durch direkten und indirekten Druck.

Die DE-Patentschrift 22 08 915 lehrt Polier- oder Pudergoldpräparate zur Herstellung eines Aufglasurgolddekors. Das Präparat enthält Goldpulver, ein Flussmittel und ein Druckmedium, wobei es sich bei letzterem um Harze und/oder organische Lösungsmittel handelt. Zur Einstellung des Farbtons kann das Präparat außer Gold andere Edelmetalle, wie Platin, Palladium, Rhodium, Iridium und Silber enthalten. Zur Erhöhung der Brennstabilität kann das Präparat zusätzlich Verbindungen wie Cassius scher Goldpurpur, Zinnoxid oder Aluminiumoxid enthalten. Zweckmäßig ist es, vor dem Auftragen des Goldpräparats eine hochschmelzende Zwischenschicht auf die silikatische Unterlage aufzubringen, die aus Zirkoniumoxid, Zirkoniumsilikat, Zinnoxid, Siliciumoxid oder Aluminiumoxid oder einer Mischung aus wenigstens zweien dieser Verbindungen besteht. Diese Zwischenschicht kann noch färbende Stoffe, wie anorganische Farbkörper, enthalten, damit sie sich bei der Herstellung des Dekors farblich besser von der silikatischen Unterlage abhebt. Zur Herstellung eines Aufglasurdekors wird das Goldpräparat mittels eines Siebdruckverfahrens auf einen Abziehbildträger der zuvor mit der Zwischenschicht versehen worden sein kann, aufgebracht. Nach dem Trocknen der Bildschicht wird diese in bekannter Weise mit einer Lackschicht versehen. Das so gewonnene Abziehbild wird auf die silikatische Unterlage übertragen und anschließend bei 1100 bis 1400 °C eingebrannt. Nachteilig an diesen Edelmetallpräparaten sind die langen Trocknungszeiten der Bildschicht, sowie die damit verbundenen ökologischen Probleme durch das Verdunsten organischer Lösungsmittel.

Auch die Siebdruckpaste für Golddekore gemäß DE-OS 21 11 729 enthält ein handelsübliches Siebdrucköl, wie Lösungen von Polymethylmethacrylat oder Ethylcellulose in hochsiedenden Lösungsmitteln, wie Ethylglykolacetat, Butylacetat oder Testbenzin.

Das Goldpräparat gemäß DE-Patent 24 35 859 enthält neben Gold ein oder mehrere Unedelmetalle, beispielsweise Titan, Eisen und Nickel, und bei Bedarf zusätzlich ein Haftoxid oder einen Glasfluss. Dieses Präparat lässt sich mittels Siebdruck ohne eine spezielle Unterlage direkt auf das zu dekorierende Substrat oder auf einen Abziehbildträger aufdrucken. Zwei beispielhafte Goldpräparate enthalten zusätzlich 2,5 Gew.-% eines roten Farbstoffs, dessen Funktion aber nirgends offenbart ist. Es wird vermutet, dass der rote Farbstoff dazu dient, das Druckbild klarer erkennbar zu machen. Auch dieses Goldpräparat enthält ein übliches Siebdruckmedium mit den eingangs geschilderten Nachteilen.

Im Bestreben, die vorgenannten Nachteile zu mindern, wurde versucht, das rein organische Druckmedium durch ein wasserverdünnbares oder Wasser enthaltendendes Druckmedium zu ersetzen - siehe DE 35 44 339 C1 und DE-OS 38 07 290.

Nachteilig an derartigen Präparaten sind deren unbefriedigenden Trocknungseigenschaften sowie zum Teil auch ungenügende Dekorqualität.

Um die konventionellen organischen Druckmedien anhaftenden Probleme, also die langen Trocknungszeiten und ökologischen Probleme durch Verdunsten von Lösungsmittel, zu vermeiden, wurden strahlenhärtende, insbesondere UV-härtende Medien entwickelt, welche in Glanzedelmetallpräparaten oder in Poliergoldpräparaten angewandt werden können. Die DE-Patentschrift 30 48 823 lehrt demgemäß eine mit UVstrahlenhärtbare Harzmasse, aus einem speziellen gesättigten Copolyester, einer polymerisierbaren Komponente mit einer sowie eine solche mit zwei oder mehr polymerisierbaren Gruppen, einem Photosensibilisator und ggf. anderen synthetischen Harzen, Pigmenten, Gleitmitteln, Verlaufshilfsmittel, Schaumverhütungsmitteln, Verdickungsmitteln und Thixotropiermitteln zwecks Einstellung der Druckeigenschaften und Inhibitoren der thermischen Polymerisation besteht.

In Abhängigkeit des Verwendungszwecks der UV-härtbaren Harzmasse gemäß DE 30 48 823 C2 kann diese bekannte anorganische Pigmente, wie sie für die Dekoration silikatischer Substrate allgemein Anwendung finden, enthalten. Alternativ hierzu kann die UV-härtbare Harzmasse auch organische Pigmente enthalten, jedoch handelt es sich bei derartigen Systemen um Dekorpräparate zu Dekoration von Substraten, welche keinem Dekorbrand unterworfen werden. Diesem Dokument lässt sich kein Hinweis entnehmen, wonach ein UV-härtbares Poliergoldpräparat zusätzlich ein organisches Pigment und/oder ein im Bindemittelsystem unlösliches/unquellbares Polymer enthält.

Das Glanzedelmetallpräparat für die Dekoration von Glas, Keramik und Porzellan gemäß DE-PS 38 19 414 enthält eine lösliche organische Edelmetallverbindung und einen UV-härtbaren organischen Träger auf der Basis von Isobornylacrylat und Dicyclopentadienylacrylat und einen darin gelösten Photoinitiator. Das Präparat kann zusätzlich ein oder mehre Oligomere mit Acrylat und/oder mit Methylacrylatgruppen enthalten. Zusätzlich können auch organische Lösungsmittel, Naturharze und synthetische Harze, Mittel zur Viskositätseinstellung und Modifizierung und Farbstoffe enthalten. Offenbart wird auch, das durch Zugabe von Goldpulver und/oder einer schwerlöslichen Goldverbindung zu dem Glanzgoldpräparat durch Photopolymerisation aushärtbare Poliergolde erhalten werden können. In diesem Dokument wird nicht offenbart, um was für Farbstoffe es sich handeln kann und in welcher Menge und zu welchem Zweck diese eingesetzt werden - offensichtlich dient auch hier die Farbe zur besseren Kenntlichmachung des Druckbilds.

Von den Erfindern der vorliegenden Anmeldung wurde festgestellt, dass die Abziehbildqualität und Dekorqualität von Poliergoldpräparaten, welche als Medium ein übliches UV-härtbares Medium enthalten, unbefriedigend ist. Offensichtlich aufgrund des schlechten Verlaufs derartiger Präparate kommt es beim Druck zu einer ungleichmäßigen, insbesondere genarbten Oberfläche. Um den Verlauf der Druckpaste zu verbessern, wurden solchen Systeme auch übliche Verlaufshilfsmittel zugesetzt. Bei derartigen Verlaufshilfsmitteln handelt es sich im allgemeinen um Produkte auf Silikonbasis, mit einer niedrigen Grenzflächespannung. Unter Verwendung derartiger Verlaufshilfsmitteln lässt sich zwar der Verlauf verbessern, gleichzeitig kommt es aber zu einem weiteren Problem nämlich einer unzureichenden Überdruckbarkeit, die eine Folge der schlechten Benetzbarkeit ist. Unter Verwendung eines solchen Verlaufshilfsmittels in einem Goldpräparat lassen sich demgemäß keine mehrfarbigen passergenauen Druckbilder erzeugen.

Aufgabe der vorliegenden Erfindung ist es demgemäß, einen Weg aufzuzeigen, die genannten Probleme zu überwinden. Die erfindungsgemäß bereitzustellenden Edelmetallpräparate, insbesondere Poliergoldpräparate, sollten demgemäß ohne die Verwendung von Verlaufshilfsmitteln einwandfrei verlaufen, so dass bei ihrer Anwendung durch direkten Druck oder indirekten Druck, also mittels der Abziehbildtechnik ästhetisch ansprechende Dekore mit hoher Oberflächequalität erhalten werden.

Es wurde gefunden, das sich die genannten Probleme und weitere Probleme, wie sie sich aus der nachfolgenden Beschreibung ergeben, dadurch lösen lassen, dass die Pigmentvolumenkonzentration (PVK) des Präparats durch Zugabe von in der Paste unlöslichen organischen Stoffen signifikant erhöht wird. Es wird angenommen, dass eine der Ursachen des schlechten Verlaufs strahlenhärtender Poliergoldpräparate auf die niedrige Pigmentvolumenkonzentration der zu verdruckenden Paste zurückgeführt werden kann. Auch wenn durch die erfindungsgemäße Maßnahme, nämlich die Pigmentvolumenkonzentration zu erhöhen, der Verlauf wesentlich verbessert wird, kann nicht ausgeschlossen werden, dass die erfindungsgemäße Qualitätsverbesserung der Präparate sowie der damit herstellenden Dekore auch auf andere Ursachen zurückgeführt werden kann.

Gegenstand der Erfindung ist somit ein strahlenhärtbares Edelmetallpräparat, insbesondere Poliergoldpräparat, enthaltend mindestens ein Edelmetall aus der Reihe Gold, Silber, Platin und Palladium in elementarer und/oder legierter Form und/oder in Form einer Verbindung, mindestens ein Flussmittel aus der Reihe einer Verbindung von Mg, Al, B, K, Na, Ca, Si, Ti, V, Cr, Mn, Fe, Co, Ni, Cu, Zn, Zr, Rh, Ru, Sn, Sb, Pb und Bi und ein strahlenhärtbares Druckmedium, dadurch gekennzeichnet, dass es mindestens eine im Druckmedium unlösliche und unquellbare, beim Dekorbrand im wesentlichen vollständig verbrennende teilchenförmige organische Verbindung als Mittel zur Erhöhung der Pigmentvolumenkonzentration (PVK) enthält. Die Unteransprüche richten sich auf bevorzugte Ausführungsformen des strahlenhärtbaren Edelmetallpräparats.

Die erfindungsgemäßen Präparate enthalten als Edelmetall ein oder mehrere Metalle aus der Reihe Gold, Silber, Platin und Palladium, in elementarer und/oder legierter Form; üblicherweise übertrifft die Einsatzmenge an Gold, diejenige der anderen Edelmetalle, welche eher der Modifizierung des Farbtons dienen. Die erfindungsgemäßen Präparate können Edelmetalle auch in Form von im Medium löslichen und/oder unlöslichen Verbindungen enthalten. Der Einsatz organischer Verbindungen eines oder mehrerer Edelmetalle in Kombination mit elementarem Edelmetall eignet sich zur Einstellung der gewünschten Farbe. Bei den löslichen Edelmetallverbindungen handelt es sich insbesondere um sogenannte Edelmetallresignate und - sulforesinate, ferner um Mercaptide von ein oder mehrere Mercaptogruppen enthaltenden organischen Verbindungen. Unlösliche Edelmetallverbindungen sind beispielsweise Goldsulfid, Goldcyanid, Goldoxid, Cyano- und Sulfitogoldkomplexe.

Die Einsatzmenge an Edelmetallen in erfindungsgemäßen Präparaten liegt üblicherweise im Bereich von 10 bis 50 Gew.-%, vorzugsweise mehr als 8 Gew.-%. Poliergoldpräparate enthalten besonders bevorzugt 16 bis 40 Gew.-% Gold. Neben Gold können ein oder mehrere Edelmetall aus der Reihe Platin, Palladium, Silber, Rhodium, Kupfer, Ruthemium und Osmium zugegen sein.

Wie dies in der Fachwelt allgemein bekannt ist, enthalten auch die erfindungsgemäßen Edelmetallpräparate ein oder mehrere Flussmittel, wobei es sich bei den Flussmitteln um organische oder anorganische Verbindungen handelt, welche vorzugsweise im Medium gelöst sind. Bevorzugte Flussmittel enthalten Verbindungen von Magnesium, Natrium, Kalium, Calcium, Bor, Aluminium, Silicium, Titan, Vanadium, Chrom, Mangan, Eisen, Kobalt, Nickel, Kupfer, Zink, Zirkonium, Zinn, Indium, Antimon, Blei und Bismuth sowie Rhodium und Ruthenium. Im Hinblick auf einen optimalen Fluss und eine gute Haftung des Präparats auf dem zu dekorierenden Substrat, werden meist mehrere Flussmittel eingesetzt, beispielsweise Kombinationen aus Verbindungen von: Bismuth und Bor; Bismuth und Vanadium und/oder Silicium; Bismuth, Vanadium und Rhodium sowie bei Bedarf zusätzlich Chrom, Silicium, Kupfer und/oder Zirkonium; Chrom und Kobalt und bei Bedarf eine oder mehrere Verbindungen von insbesondere Ti, In, B, Si, Zr und Rh, bzw. Ru (siehe DE 199 41 020 A1). Bei den als Flussmittel einzusetzenden Unedelmetallverbindungen handelt es sich um anorganische und/oder organische Verbindungen, wie Resinate, Sulforesinate, Alkanoate, Naphthenate, Salze von Carbonsäuren, wie Acetate. Einsetzbar sind die Flussmittelelemente auch in Form ihrer Oxide, Salze, Borate und Gläser, wie beispielsweise Alkaliborsilikate.

Die Einsatzmenge der Flussmittelelemente kann in weiten Bereichen liegen. Üblicherweise können Flussmittel in einer Gesamtmenge von bis zu etwa 20 Gew.-% anwesend sein, berechnet in Form der Verbindungen und bezogen auf das Präparat. Vorzugsweise enthält das Präparat 0,1 bis 15 Gew.-% Flussmittel, insbesondere 0,1 bis 8 Gew.-%. Die optimale Einsatzmenge und Auswahl der Flussmittelbestandteile wird der Fachmann durch orientierende Versuche leicht ermitteln.

Erfindungswesentliches Merkmal des Edelmetallpräparats ist die Anwesenheit eines nachfolgend "Mittel zur Erhöhung der PVK" bezeichnetes organisches Mittel, das teilchenförmig ist, sich im Druckmedium unter üblichen Anwendungstemperaturen, also insbesondere unter etwa 60 °C, weder löst, noch quillt und beim Dekorbrand im wesentlichen vollständig verbrennt. Das erfindungsgemäße "Mittel zur Erhöhung der PVK" wird in Form einer einzigen oder mehrerer verschiedener Verbindungen eingesetzt und zwar in einer Gesamtmenge bis zu 20 Gew.-%, vorzugsweise bis zu 15 Gew.-% und insbesondere 1 bis 10 Gew.-%, bezogen auf das Präparat. Durch den Einsatz der erfindungsgemäßen "Mittel zur Erhöhung des PVK" wird Pigmentvolumenkonzentration des Edelmetallpräparats, das aufgrund der hohen Dichte des Edelmetalls sehr niedrig ist, wesentlich erhöht. Eine Erhöhung der Pigment-Volumen-Konzentration um 30 bis 300 % führt zu einem wesentlich verbesserten Verlauf des Präparats und damit zu qualitativ hochwertigen Dekoren. Das Mittel zur Erhöhung der PVK wirkt also wie ein organischer Füllstoff.

Bei den erfindungsgemäßen Mitteln zur Erhöhung der Volumenkonzentration (PVK) handelt es sich um mindestens eine, in vielen Fällen aber mehrere organische teilchenförmige Verbindungen, welche beim Dekorbrand im wesentlichen vollständig verbrennen. Unter dem Begriff "im wesentlichen vollständig" wird verstanden, dass die organischen Bestandteile derartiger Verbindungen vollständig verbrennen, anwesende Metallatome, beispielsweise von Metallkomplexen, aber Bestandteil des Flussmittels werden.

Es wurde gefunden, dass organische Pigmente sehr gut geeignet sind, um die PVK der erfindungsgemäßen Edelmetallpräparate zu erhöhen und damit die Verlaufseigenschaften sowie die Dekorqualität in wirksamer Weise zu verbessern. Ein Vorteil der organischen Pigmenten besteht darin, dass diese in der Regel bereits in einer solchen Teilchenverteilung vorliegen, wie sie zur Herstellung nicht-keramischer Druckpasten zur Anwendung gelangen. Erfindungsgemäße Edelmetallpräparate enthalten im allgemeinen bis zu 10 Gew.-% eines oder mehrerer Mittel zur Erhöhung der PVK.. Besonders bevorzugte Mittel enthalten 0,5 bis 5 Gew.-% eines organischen Pigments.

Im Prinzip können organische Pigmente unterschiedlichster chemischer Konstitution Anwendung finden. Bevorzugt werden solche Pigmente, welche eine möglichst niedrige UV-Absorption aufweisen und unter den Bedingungen des keramischen Dekorbrandes nicht zur Graphitisierung neigen. Einsetzbare organische Pigmente sind beispielhaft folgende Stoffklassen zuzuordnen: Gelbe und rote Mono- und Disazopigmente, Naphthol-AS-pigmente, Benzimidazolpigmente, gelbe Diszokondensationspigmente, Metallkomplexpigmente auf der Basis von Azoverbindungen, Azomethinen und Isoindolinonen, Phthalocyaninpigmente, Thioindigopigmente. Quinacridonpigmente, Perinon- und Perylenpigmente sowie Anthrachinonpigmente und Pyranrthonpigmente sind war zu Erhöhung der PVK geeignet, jedoch neigen diese zur Graphitisierung. Ein gewisser Nachteil vieler organischer Pigmente besteht darin, dass sie mehr oder weniger stark UV-Licht absorbieren, wonach die Härtungsdauer verlängert wird.

Eine weitere Klasse geeigneter Mittel zur Erhöhung der Pigmentvolumenkonzentration erfindungsgemäßer Edelmetallpräparate sind Polymere, worunter auch Copolymere eingeschlossen werden, welche unter den üblichen Anwendungsbedingungen im Druckmedium unlöslich und unquellbar sind. Die Polymeren und Copolymeren können unterschiedlichen Stoffklassen zugeordnet werden; wesentlich ist nur, dass diese in dem Edelmetallpräparat unlöslich und unquellbar sind und unter den Dekorbrandbedingungen vollständig verbrennen. Bei den Polymeren kann es sich beispielhaft um Polyolefine, Vinyl-, Acryl-, oder Methacrylpolymere, Polyester, Polyamide oder Phenolformaldehydharze, Polymethylenharnstoff, Polyether mit der Maßgabe handeln, dass der Polymerisationsgrand ausreichend hoch ist oder das Polymer vernetzt ist, um eine Löslichkeit und Quellbarkeit im Druckmedium auszuschließen. Die Einsatzmenge dieser Klasse von Mitteln zu Erhöhung der PVK liegt üblicherweise im Bereich bis 10 Gew.-%, insbesondere im Bereich von 0,5 bis 7 Gew.-%.

Ein Vorteil der zuletzt genannten Klasse von Mitteln zur Erhöhung der Pigmentvolumenkonzentration liegt darin, dass deren UV-Absorption wesentlich geringer ist, als jene der organischen Pigmente. Damit wird das Härtungsverhalten des strahlungshärtbaren Druckmediums nicht negativ beeinflusst.

Ein Problem der polymeren Mittel zur Erhöhung der PVK besteht darin, dass diese teilweise nicht in optimaler Teilchenverteilung verfügbar sind. Mittel mit einer mittleren Teilchengröße um/über 10 µm geben zwar noch einen guten Verlauf des Edelmetallpräparats, jedoch kann es aufgrund der groben Partikel während des Dekorbrandes zu Dekorfehlern kommen. Dekorfehler lassen sich unter Verwendung eines polymeren Mittels mit niedriger mittlerer Korngröße, beispielsweise um/unter 5 µm vermeiden, jedoch kann es bei hohem Einsatz zu einem starken Anstieg der Viskosität, einer Minderung des Verlaufs und zusätzlich zu einer Mattierung kommen. Es wurde gefunden, dass auch Zusammensetzungen auf Basis von im UV-härtbaren Medium unlöslichen Polymeren, wie Polymethylhenharnstoff mit feindisperser Kieselsäure, wie sie im Handel erhältlich sind, den gewünschten Effekt nach bisherigen Erkenntnissen sehr gut erfüllen.

Gemäß einer bevorzugten Ausführungsform werden als Mittel zur Erhöhung der Pigmentvolumenkonzentration sowohl organische Pigmente als auch zusätzlich ein oder mehrere polymere organische Füllstoffe eingesetzt. Durch die Kombination der beiden Stoffklassen lassen sich die Verlaufseigenschaften sowie die rheologischen Eigenschaften optimal aufeinander abstimmen. Zweckmäßigerweise erhält ein erfindungsgemäßes Edelmetallpräparat demgemäß 0,5 bis 5 Gew.-% eines organischen Pigments und 0,5 bis 7 Gew.-% eines polymeren organischen Füllstoffs, wobei es sich bevorzugt um ein vernetztes organisches Polymer handelt. Besonders bevorzugte Edelmetallpräparate enthalten als Mittel zur Erhöhung der Pigmentvolumenkonzentration etwa 1 bis 3 Gew.-% eines oder mehrer organischer Pigmente und etwa 2 bis 6 Gew.-% eines oder mehrerer polymerer organischer Füllstoffe. Eine derartige Kombination weist ein ausgezeichnetes Eigenschaftsbild sowohl bezüglich des Verlaufs und damit einer einwandfreien Dekoroberfläche als auch einer problemlosen und raschen Durchhärtung einer auf ein zu dekorierendes Substrat oder einem Abziehbildträger aufgebrachten Dekorschicht auf.

Bei dem strahlenhärtbaren Druckmedium handelt es sich in der Regel um ein Mehrkomponentensystem, das mindestens eine durch Strahlen polymerisierbare monomere und/oder oligomere Verbindung sowie einen Photoinitiator und gegebenenfalls ein im Monomeren oder Oligomeren gelöstes Harz enthält. Bezüglich der auszuwählenden monomeren und oligomeren polymerisierbaren Stoffe, wird auf die Lehre der DE-Patentschriften 30 48 823 und 38 19 414 verwiesen. Gemäß DE-PS 30 48 823 enthält das Druckmedium einen gesättigten Copolyester, der in einer polymerisierbaren Komponente gelöst ist. Bei der polymerisierbaren Komponente handelt es sich um eine Kombination einer polymerisierbaren Komponente mit einer polymerisierbaren Doppelbindung und zusätzlich einer Verbindung mit zwei oder mehr polymerisierbaren Doppelbindungen im Molekül. Beispiele geeigneter photopolymerisierbarer Verbindungen mit einer polymerisierbaren Doppelbindung im Molekül sind: (i) Styrol, α-Methylstyrol; (ii) Alkylacrylate und - methacrylate, wobei Alkyl insbesondere für Methyl, Ethyl, Isopropyl, n-Propyl, n-, sek.- und t-Butyl, 2-Ethylhexyl, Lauryl, Stearyl, Cyclohexyl, Methoxyethyl, Ethoxyethyl, Butoxyethyl, Hydroxyethyl, Poly(ethylenoxy)ethyl, (iii) Monoacrylate und -methacrylate von Addukten von Bisphenol A und Alkylenoxiden, wie Ethyloxid oder Propylenoxid, (iv) urethanmodifizierte Monoacrylate und Methacrylate die eine Acryloyloxy- oder Methacryloyloxygruppe im Molekül enthalten, (v) epoxygruppenmodifizierte Acrylate und Methacrylate, Oligoestermono-acrylate bzw. -methacrylate. Die Einsatzmenge an Photoinitiatoren im Druckmedium liegt üblicherweise im Bereich von 0,1 bis 20 Gew.-%, meist aber im Bereich von 1 bis 10 Gew.-%.

Geeignete photomerisierbare Verbindungen mit zwei oder mehr polymerisierbaren Doppelbindungen sind zum Beispiel: Alkylenglykoldiacrylat bzw. -dimethacrylat, wobei Alkylen für Ethylen, Propylen, 1,4-Butylen-, Noepentyl- und Hexamethylen steht; Diethylenglykol- und Triethylenglykoldiacrylat bzw. -methacrylat; Trimethylolpropantrimethacrylat.

Gemäß einer besonders bevorzugten Ausführungsform enthält das strahlenhärtende Druckmedium ein in einem momomeren Acrylat oder ggf. Methacrylat gelöstes sogenanntes Festharz, wobei es sich hierbei insbesondere um ein Polymethylmethacrylat-Copolymer, etwa ein Copolymer auf der Basis Polymethylmehtacrylat / Polybutylmethacrylat, handelt. Vorzugsweise besteht ein derartiges Druckmedium aus etwa 20 bis 40 Gew.-% eines oder mehrer gelöster Festharze, 45 bis 70 Gew.-% eines oder mehrer Acryl und/oder Methacrylmonomerer und 1 bis 10 Gew.-%, insbesondere 2 bis 6 Gew.-% eines oder mehrerer Photoinitiatoren und gegebenenfalls weiteren Hilfsstoffen, wie Thixotropiermittel, Inhibitoren der thermischen Polymerisation, wie Hydrochinon, Hydrochinonmethylether und tert.-butylierte Phenole, und Aminsynergisten, in einer Menge von insgesamt bis zu 10 Gew.-%, jeweils bezogen auf das Druckmedium.

Als Photoinitiatoren sind geeignet: Benzoine, z.B. Benzoinmethylether, Benzoinethylether, Benzoinisopropylether, Benzoin, α-Methylbenzoin; Anthrachinone, wie 2-Chloranthrachinon; Benzophenone, wie Benzophenon, p-Chlorbenzophenon, p-Dimethylaminobenzophenon; Schwefelverbindungen, wie Diphenyldisulfid, Tetramethylthiuramdisulfid; Xanthone und Thioxanthine, wie 2-oder 3-Methylxanthon, 2- oder 3-Ethylxanthon, 3 Ethyloxyxanthon, 2,7-Dichlorxanthon, 2-Nitroxanthon sowie analoge Derivate des Thioxanthons; Aryl-Alky-Phosphinoxide.

Zur Steigerung der Wirkung der Photoinitiatoren können diese zusammen mit Synergisten aus der Reihe von Aminen, wie Triethanolamin, N,N-Diethylaminoethylacrylat, eingesetzt werden.

Die Strahlenhärtung erfolgt durch strahleninduzierte Polymerisation, wobei es sich um kurzwellige Strahlung handelt, insbesondere um Strahlung im Bereich nahe des sichtbaren Lichts (α um 420 nm) und des gesamten UV-Bereichs, insbesondere α 300 - 400 nm.

Ein besonders bevorzugtes erfindungsgemäßes Poliergoldpräparat enthält 10 bis 50 Gew.-% Gold in elementarer Form, 0,1 bis 20 Gew.-%, insbesondere 1 bis 8 Gew.-% Flussmittel, 30 bis 80 Gew.-%, insbesondere 45 bis 65 Gew.-% strahlenhärtendes Medium und 1 bis 10 Gew.-%, insbesondere 3 bis 8 Gew.-% erfindungsgemäße Mittel zur Erhöhung der Pigmentvolumenkonzentration. Zweckmäßigerweise enthält das Präparat zur Erhöhung der Pigmentvolumenkonzentration sowohl ein organisches Pigment als auch einen polymeren organischen Füllstoff. Das strahlenhärtende Medium umfasst vorzugsweise ein in einem photopolymerisierbaren Monomer, insbesondere einem Acryloder Methacrylmonomer, gelöstes Polymer und einen Photoinitiator wobei die Einsatzmenge des Photoinitiators im Bereich von 1 bis 20 Gew.-%, insbesondere 0,1 bis 10 Gew.-%, bezogen auf das Druckmedium, liegt.

Die Herstellung des erfindungsgemäßen Edelmetallpräparats erfolgt in Analogie zur Herstellung vor bekannter Edelmetallpräparate: Die Edelmetalle in Pulverform und, soweit anwesend, Edelmetallverbindungen, die Flussmittel und die erfindungsgemäßen Mittel zur Erhöhung der Pigmentvolumenkonzentration werden unter Verwendung üblicher Anpastvorrichtungen, beispielsweise eines Mehrwalzenstuhls in einem strahlenhärtbaren Druckmedium angepastet. Der Photoinitiator kann entweder bereits im Medium enthalten sein oder der Paste am Ende zugefügt werden. Soweit erforderlich, werden in die Paste weitere Hilfsstoffe, wie Thioxotropiermittel und weitere polymerisierbare Lösungsmittel zwecks Einstellung der Druckviskosität eingearbeitet.

Ein weiterer Gegenstand der Erfindung richtet sich auf ein Abziehbild zur Herstellung von Edelmetalldekoren, insbesondere Poliergolddekoren. Die Herstellung der Abziehbilder ist der Fachwelt im Prinzip bekannt: Ein Abziehbildpapier das eine wasserlösliche oder thermisch aktivierbare Trennschicht aufweist, wird zur Erzeugung einer Bildschicht mittels eines Druckverfahrens, insbesondere eines Siebdruckverfahrens, unter Verwendung eines erfindungsgemäßen strahlenhärtbaren Edelmetallpräparats bedruckt. Die Bildschicht mittels einer geeigneten Strahlungsquelle insbesondere einer Strahlungsquelle, für UV-Licht, bestrahlt, wobei die Bildschicht aushärtet. Nach dem Aushärten wird die Bildschicht mit einem üblichen Lackfilm, meist handelt es sich um einen Acryl- oder Methacrylharzfilm, überfilmt.

Durch den Einsatz erfindungsgemäßer Edelmetallpräparate, welche ein oder mehrere erfindungsgemäße Mittel zur Erhöhung der Pigmentvolumenkonzentration enthalten, sind qualitativ hochwertige Abziehbilder zugänglich, welche eine fehlerfreie Oberfläche aufweisen und auch nach dem Dekorbrand ein Dekor hoher Qualität liefern. Gemäß einer besonders bevorzugten Ausführungsform der erfindungsgemäßen Abziehbilder enthält die Bildschicht ein Edelmetallpräparat, dessen Druckmedium als photoreaktive Komponente ein Monoacrylat oder Monomethacrylat nicht jedoch ein mehrfunktionelles Acrylat oder Methacrylat, enthält. Durch den Verzicht mehrfunktioneller Acrylate bzw. Methacrylate im Druckmedium sind Abziehbilder mit höherer Flexibilität und damit geringerer Bruchneigung der Bildschicht zugänglich.

Die erfindungsgemäßen Edelmetallpräparate lassen sich zur Herstellung eines Edelmetalldekors, insbesondere eines Poliergolddekors auf einem dekorbrandfähigen Substrat verwenden, wobei das Edelmetallpräparat durch direkten oder indirekten Druck (Abziehtechnik) auf das zu bedruckende Substrat aufgebracht wird. Der Dekorbrand erfolgt in an sich bekannter Weise bei einer auf das Substrat abgestimmte Temperatur welche bei Porzellan und Keramik im Bereich von 700 bis 1400 °C, insbesondere 800 bis 1250 °C. Zur Herstellung von Poliergolddekoren wird das eingebrannte Dekor in bekannter Weise poliert.

Sofern dies erwünscht ist, kann das erfindungsgemäße Edelmetallpräparat zusätzlich Stoffe enthalten, wie sie aus dem Stand der Technik zur Erhöhung der Brennstabilität bekannt sind. In analoger Weise kann sich unter einer erfindungsgemäßen Bildschicht eines Abziehbilds auch eine im Stand der Technik bekannte Unterlagenschicht zur Verbesserung der Haftung und/oder Kratzfestigkeit des Dekors befinden.

Ein weiterer Gegenstand der Erfindung richtet sich auf das Verfahren zur Herstellung eines Edelmetalldekors, insbesondere Poliergolddekors auf einem dekorbrandfähigem Substrat, wie Glas, Keramik und Porzellan. Hierbei wird das erfindungsgemäße Präparat in bekannter Weise auf das Substrat gedruckt, soweit noch nötig die Strahlenhärtung durchgeführt und schließlich unter Dekorbrandbedingungen gebrannt.

Es war nicht vorhersehbar, dass durch den Einsatz von erfindungsgemäßen Mitteln zur Erhöhung der Pigmentvolumenkonzentration der Verlauf und damit die Dekorqualität des Edelmetallpräparats wesentlich verbessert werden konnte. Gleichfalls nicht vorhersehbar war, dass durch die Kombination eines organischen Pigments mit einem polymeren organischen Füllstoff die Verlaufseigenschaften des Präparats und damit die Dekoreigenschaften des daraus hergestellten Dekors unter Beibehaltung guter, d.h. rascher Strahlenhärtung verbessert werden konnten.

### Beispiel

| | |
|---|---|
| Goldpulver | 32 g |
| Zirkoniumsilikat | 0,2 g |
| Erdalkali/Alkaliborosilikat | 1,8 g |
| Zinnoxid | 3,5 g |
| 1-((2,4-Dinitrophenyl)azo)-2-naphtol (= Farbpigment) | 2 g |
| Compound auf Basis Polymethylenharnstoff und hochdisperser Kieselsäure | 4 g |
| (Deuteron® MM659, Deuteron GmbH, Achim (DE)) Medium | 56,5 g |

Das Medium bestand aus

| | |
|---|---|
| Isobornylacrylat | 57% |
| Oligoglykolacrylat | 9% |
| Phthalatweichmacher | 4% |
| MMA-n-BuMA Copolymer | 20% |
| Benzyldimethylketal | 1% |
| Triphenylphosphinoxid | 6% |
| N,N-Dimethylaminobenzol | 2% |
| Rizinusölderivat | 1% |

Die Inhaltsstoffe wurden in einer Kugelmühle gut homogenisiert und dann mit dem Medium angepastet.

Der Druck der Siebdruckpaste erfolgte mit einem 300-er (mesh/inch) Stahlsieb auf Abziehbildpapier der Marke Trucal auf einer SPS-Druckmaschine. Im nachgeschalteten UV-Trockner wurde gehärtet und anschließend mit einer handelsüblichen Filmlösung (Produkt-Nr. 83450 der Firma dmc² AG) und einem 27-er (Fäden/cm) Polyestersieb überfilmt. Die Abziehbilder wurden auf Porzellan übertragen und bei 1230°C in 90 min (kalt zu kalt) gebrannt. Anschließend wurden die Dekore poliert. Die polierten Dekore, die mit der Paste des Beispiels hergestellt wurden, zeigten einen schönen gelben Ausbrennfarbton mit seidenmattem Glanz.

### Vergleichsbeispiel:

| | |
|---|---|
| Goldpulver | 32 g |
| Zirkoniumsilikat | 0,2 g |
| Erdalkali/Alkaliborosilikat | 1,8 g |
| Zinnoxid | 3,5 g |
| Medium (identisch wie im Beispiel) | 62,5 g |

Die Abziehbilder, die mittels der Paste des Vergleichsbeispiels hergestellt wurden, zeigten im Gegensatz zum erfindungsgemäßen Beispiel bereits im ungebrannten Zustand Krater. Dieser Fehler ist später auch im eingebrannten Abziehbild sichtbar.

## Patentansprüche

1. Strahlenhärtbares Edelmetallpräparat, insbesondere Poliergoldpräparat, enthaltend mindestens ein Edelmetall aus der Reihe Gold, Silber, Platin und Palladium in elementarer und/oder legierter Form und/oder in Form einer Verbindung, mindestens ein Flussmittel aus der Reihe einer Verbindung von Mg, Al, B, K, Na, Ca, Si, Ti, V, Cr, Mn, Fe, Co, Ni, Cu, Zn, Zr, Rh, Ru, Sn, In, Sb, Pb und Bi und ein strahlenhärtbares Druckmedium,
**dadurch gekennzeichnet,**
**dass** es mindestens eine im Druckmedium unlösliche und unquellbare, beim Dekorbrand im wesentlichen vollständig verbrennende teilchenförmige organische Verbindung als Mittel zur Erhöhung der Pigmentvolumenkonzentration (PVK) enthält.

2. Strahlenhärtendes Edelmetallpräparat nach Anspruch 1,
**dadurch gekennzeichnet,**
**dass** es als Mittel zur Erhöhung der PVK ein organisches Pigment und/oder ein organisches Polymer, insbesondere vernetztes organisches Polymer und/oder ein Compound eines organischen Polymers und einer anorganischen Verbindung, insbesondere hochdisperser Kieselsäure enthält.

3. Strahlenhärtendes Edelmetallpräparat nach Anspruch 1 oder 2,
**dadurch gekennzeichnet,**
**dass** es bis zu 15 Gew.-%, insbesondere 1 bis 10 Gew.-% gattungsgemäße Mittel zur Erhöhung der PVK enthält.

4. Strahlenhärtendes Edelmetallpräparat nach einem der Ansprüche 1 bis 3,
**dadurch gekennzeichnet,**
**dass** es als Mittel zur Erhöhung des PVK 0,5 bis 5 Gew.-% eines organischen Pigments und 0,5 bis 7 Gew.-% eines unvernetztes oder vernetzten organischen Polymers enthält.

5. Strahlenhärtendes Edelmetallpräparat nach einem der Ansprüche 1 bis 4,
**dadurch gekennzeichnet,**
**dass** es ein Poliergoldpräparat ist, enthaltend 10 bis 50 Gew.-%, insbesondere 16 bis 40 Gew.-% Gold in elementarer Form, 0,1 bis 20 Gew.- %, insbesondere 1 bis 8 Gew.-% Flussmittel, 30 bis 80 Gew.-% strahlenhärtendes Medium, umfassend ein in einem photopolymerisierbaren Monomer gelöstes Polymer und einen Photoinitiator in einer Menge von 0,1 bis 20 Gew.-%, insbesondere 1 bis 10 Gew.-%, bezogen auf das strahlenhärtende Medium, und 1 bis 10 Gew.-%, bezogen auf das Präparat, gattungsgemäße Mittel zur Erhöhung des PVK.

6. Abziehbild zur Herstellung von Edelmetalldekoren, insbesondere Poliergolddekoren, umfassend einen versehenen Abziehbildträger, eine Bildschicht und eine Filmschicht,
**dadurch gekennzeichnet,**
**dass** die Bildschicht erhalten wurde durch Auftragen eines strahlenhärtbaren Edelmetallpräparats gemäß einem der Ansprüche 1 bis 5 auf den Abziehbildträger oder einen mit einer Unterlageschicht versehenen Abziehbildträger.

7. Verwendung eines strahlenhärtenden Edelmetallpräparats gemäß einem der Ansprüche 1 bis 5 zur Herstellung eines Edelmetalldekors, insbesondere Poliergolddekors, auf einem dekorbrandfähigen Substrats.

8. Verfahren zur Herstellung eines Edelmetalldekors, insbesondere Poliergolddekors, auf einem dekorbrandfähigen Substrat mit einem pastenförmigen strahlenhärtbaren Edelmetallpräparat, Härtung durch Bestrahlung mit einer kurzwelligen Strahlung (λ ≤ 420 nm)und Dekorbrand,
**dadurch gekennzeichnet,**
**dass** man ein strahlenhärtbares Edelmetallpräparat gemäß einem der Ansprüche 1 bis 5 verwendet.

## Claims

1. Radiation-curing precious metal preparation, especially a burnish gold preparation, containing at least one precious metal from the series gold, silver, platinum and palladium in elemental and/or alloyed form and/or in the form of a compound, at least one fluxing agent from the series of a compound of Mg, Al, B, K, Na, Ca, Si, Ti, V, Cr, Mn, Fe, Co, Ni, Cu, Zn, Zr, Rh, Ru, Sn, In, Sb, Pb and Bi and a radiation-curing printing medium,
**characterised in that**
it contains at least one particulate organic compound, which is insoluble and non-swellable in the printing medium and substantially burns completely during decoration firing, as an agent to increase the pigment volume concentration (PVC).

2. Radiation-curing precious metal preparation according to claim 1,
**characterised in that**
it contains an organic pigment and/or an organic polymer, especially a crosslinked organic polymer and/or a compound of an organic polymer with an inorganic compound, especially with fine-particle silica, as the agent to increase the PVC.

3. Radiation-curing precious metal preparation according to claim 1 or 2,
**characterised in that**
it contains up to 15 wt.%, especially 1 to 10 wt.%, of generic agents to increase the PVC.

4. Radiation-curing precious metal preparation according to one of claims 1 to 3,
**characterised in that**
it contains 0.5 to 5 wt.% of an organic pigment and 0.5 to 7 wt.% of a non-crosslinked or crosslinked organic polymer as the agent to increase the PVC.

5. Radiation-curing precious metal preparation according to one of claims 1 to 4,
**characterised in that**
it is a burnish gold preparation, containing 10 to 50 wt.%, especially 16 to 40 wt.%, gold in elemental form, 0.1 to 20 wt.%, especially 1 to 8 wt.%, fluxing agent, 30 to 80 wt.% radiation-curing medium, comprising a polymer dissolved in a photopolymerisable monomer and a photoinitiator in a quantity of 0.1 to 20 wt.%, especially 1 to 10 wt.%, based on the radiation-curing medium, and 1 to 10 wt.%, based on the preparation, of generic agents to increase the PVC.

6. Transfer for the production of precious metal decorations, especially burnish gold decorations, comprising a transfer support provided [sic], a design layer and a film layer,
**characterised in that**
the design layer was obtained by application of a radiation-curing precious metal preparation according to one of claims 1 to 5 on to the transfer support or a transfer support provided with a backing layer.

7. Use of a radiation-curing precious metal preparation according to one of claims 1 to 5 for the production of a precious metal decoration, especially a burnish gold decoration, on a substrate capable of decoration firing.

8. Process for the production of a precious metal decoration, especially a burnish gold decoration, on a substrate capable of decoration firing with a radiation-curing precious metal preparation in paste form, curing by irradiation with short-wave radiation (λ ≤ 420 nm) and decoration firing,
**characterised in that**
a radiation-curing precious metal preparation according to one of claims 1 to 5 is used.

## Revendications

1. Préparation de métal précieux, en particulier préparation d'or mat, durcissable par irradiation, contenant au moins un métal précieux du groupe formé par l'or, l'argent, le platine et le palladium, sous forme élémentaire et/ou d'alliage et/ou sous la forme d'un composé, au moins un fondant du groupe formé par un composé de Mg, Al, B, K, Na, Ca, Si, Ti, V, Cr, Mn, Fe, Co, Ni, Cu, Zn, Zr, Rh, Ru, Sn, In, Sb, Pb et Bi et un milieu d'impression durcissable par irradiation, **caractérisée en ce qu'**elle contient au moins un composé organique particulaire, insoluble et ne gonflant pas dans le milieu d'impression, presque totalement combustible lors du recuit décoratif, en tant qu'agent permettant d'augmenter la concentration pigmentaire volumique (PVK).

2. Préparation de métal précieux durcissable par irradiation selon la revendication 1, **caractérisée en ce qu'**elle contient, en tant qu'agent permettant d'augmenter la PVK, un pigment organique et/ou un polymère organique, en particulier un polymère organique réticulé et/ou une combinaison d'un polymère organique et d'un composé inorganique, en particulier de l'acide silicique fortement dispersé.

3. Préparation de métal précieux durcissable par irradiation selon la revendication 1 ou 2, **caractérisée en ce qu'**elle contient jusqu'à 15% en poids, en particulier de 1% à 10% en poids d'agents génériques permettant d'augmenter la PVK.

4. Préparation de métal précieux durcissable par irradiation selon l'une quelconque des revendications 1 à 3, **caractérisée en ce qu'**elle contient, en tant qu'agent permettant d'augmenter la PVK, 0,5% à 5% en poids d'un pigment organique et 0,5% à 7% en poids d'un polymère organique non réticulé ou réticulé.

5. Préparation de métal précieux durcissable par irradiation selon l'une quelconque des revendications 1 à 4, **caractérisée en ce qu'**il s'agit d'une préparation d'or mat contenant 10% à 50% en poids, en particulier 16% à 40% en poids d'or sous forme élémentaire, 0,1% à 20% en poids, en particulier 1% à 8% en poids de fondant, 30% à 80% en poids de milieu durcissable par irradiation comprenant un polymère dissous dans un monomère photopolymérisable et un photoamorceur à raison de 0,1% à 20% en poids, en particulier de 1% à 10% en poids, par rapport au milieu à durcir par irradiation, et 1% à 10% en poids, par rapport à la préparation, de l'agent générique permettant d'augmenter la PVK.

6. Image à décalquer pour la production de décors de métal précieux, en particulier de décors d'or mat, comprenant un support d'image à décalquer prévu, une couche d'image et une couche de film, **caractérisée en ce que** la couche d'image a été obtenue en déposant une préparation de métal précieux durcissable par irradiation selon l'une quelconque des revendications 1 à 5 sur le support d'image à décalquer ou un support d'image à décalquer pourvu d'une sous-couche.

7. Utilisation d'une préparation de métal précieux durcissable par irradiation selon l'une quelconque des revendications 1 à 5 pour la production d'un décor de métal précieux, en particulier d'un décor d'or mat, sur un substrat apte au recuit décoratif.

8. Procédé de production d'un décor de métal précieux, en particulier d'un décor d'or mat, sur un substrat apte au recuit décoratif avec une préparation de métal précieux durcissable par irradiation sous forme de pâte, de durcissement par irradiation avec un rayonnement à faible longueur d'onde (λ ≤ 420 nm) et de recuit décoratif, **caractérisé en ce que** l'on utilise une préparation de métal précieux durcissable par irradiation selon l'une quelconque des revendications 1 à 5.
